# EUROPÄISCHE PATENTSCHRIFT

(11) **EP 1 398 612 B1**
(45) Veröffentlichungstag und Bekanntmachung des Hinweises auf die Patenterteilung: **03.03.2010**
(21) Anmeldenummer: 02020369.1
(22) Anmeldetag: 12.09.2002
(51) Int. Cl.: G01M 11/00, G01N 21/88

(54) **Vorrichtung zur Überwachung der Funktionalität eines optischen Elements**
Apparatus for monitoring the functionality of an optical element
Appareil de surveillance de la fonctionalite d'un élément optique

(43) Veröffentlichungstag der Anmeldung: 17.03.2004
(73) Patentinhaber: Trumpf Laser- und Systemtechnik GmbH, 71254 Ditzingen (DE)
(72) Erfinder: Fliss, Stefan, 70180 Stuttgart (DE)
(74) Vertreter: Kohler Schmid Möbus

(56) Entgegenhaltungen:
- BE-A- 1 007 005
- DE-A1- 3 143 422
- JP-A- 59 082 184
- JP-A- 63 207 487
- US-A- 4 691 106
- US-A- 5 159 402
- US-A- 6 046 802
- DOWDEN S ET AL: "REFLECTOMETER FOR FAST MEASUREMENTS OF MIRROR REFLECTIVITY" MEASUREMENT SCIENCE AND TECHNOLOGY, IOP PUBLISHING, BRISTOL, GB, Bd. 8, Nr. 11, 1. November 1997 (1997-11-01), Seiten 1258-1261, XP000755929 ISSN: 0957-0233
- TAKAHASHI H ET AL: "AUTOMATIC REFLECTIVITY MAP MEASUREMENTS OF HIGH POWER CO2 LASER OPTICS" OPTICS AND LASER TECHNOLOGY, ELSEVIER SCIENCE PUBLISHERS BV., AMSTERDAM, NL, Bd. 21, Nr. 1, 1. Februar 1989 (1989-02-01), Seiten 37-40, XP000066727 ISSN: 0030-3992

## Beschreibung

Die Erfindung betrifft eine Anordnung zur Überwachung der Funktionalität eines im Strahlengang eines Laserstrahls angeordneten optischen Elements gemäß dem Oberbegriff von Anspruch 1 sowie einen Laser mit einer solchen Überwachungsanordnung.

Eine derartige Überwachungsanordnung ist beispielsweise durch die US-A-6 046 802 bekannt geworden.

Ein auf ein optisches Element, z.B. einen Auskoppelspiegel eines Laserresonators, treffender Laserstrahl wird nicht ausschließlich reflektiert oder transmittiert, sondern ein geringer Teil wird auch absorbiert. Eine Verschmutzung des optischen Elements führt zu einer verstärkten Absorption des Laserstrahls und damit zu einer Erwärmung des optischen Elements, die bei den heute üblichen hohen Laserleistungen bis hin zur Verdampfung des betreffenden optischen Elements gehen kann. Die dabei entstehenden Dämpfe sind gesundheitsschädlich und verunreinigen die Umgebung, etwa den Laserresonator. Ein Sprung bzw. Riss im Auskoppelspiegel mit resultierendem Vakuumleck des Laserresonators kann zur völligen Zerstörung des Lasers führen.

Aus der DE 198 39 930 C1 ist es bereits bekannt, zur Überwachung eines Schutzglases eine zusätzliche Lichtquelle einzusetzen. Die Strahlung der Lichtquelle wird auf der einen Seite des Schutzglases eingekoppelt und die Intensität der auf der anderen, gegenüberliegenden Seite des Schutzglases ausgekoppelten Strahlung mit einem Detektor gemessen. Innere Materialdefekte des Schutzglases, wie Risse, können durch eine Intensitätsänderung erkannt werden. Diese Überwachungsvorrichtung ist nur für transparente optische Elemente geeignet. Außerdem kann die Oberfläche des optischen Elements nicht getrennt vom übrigen optischen Element auf ihre Funktionalität überwacht werden. Wird die Oberfläche eines optischen Elements auf ihre Funktionalität überwacht, können bereits geringere Schäden am optischen Element entdeckt und schwere Folgeschäden vermieden werden.

Die eingangs genannte US-A-6 046 802 offenbart mehrere Ausführungsformen von Anordnungen zur Überwachung der Funktionalität eines im Strahlengang eines Laserstrahls angeordneten optischen Elements, wobei sich die Ausführungsformen hinsichtlich der verwendeten Lichtquelle unterscheiden. In einer ersten Ausführungsform wird die Fresnel-Reflexion des Laserstrahls als Messstrahl verwendet, so dass Messstrahl und Laserstrahl die gleiche Wellenlänge aufweisen. Die Fresnel-Reflexion entsteht durch den Brechungsindexunterschied zwischen der Oberfläche des optischen Elements und der Umgebung.
In einer zweiten Ausführungsform wird die Strahlung eines zweiten Lasers als Messstrahl verwendet, wobei der Messstrahl mittels einer Strahlformungsoptik auf die Oberfläche des optischen Elements gerichtet wird. Der Detektor empfängt den von der Oberfläche reflektierten Messstrahl. Eine erste Strahlformungsoptik stellt den Strahldurchmesser des Laserstrahls und eine zweite Strahlformungsoptik den Strahldurchmesser des Messstrahls ein, die so ausgebildet ist, dass der Strahldurchmesser des Messstrahls größer als der Strahldurchmesser des Laserstrahls ist.
In einer dritten Ausführungsform umfasst die Überwachungsanordnung eine erste Überwachungsvorrichtung zur Überwachung der eingangsseitigen Oberfläche und eine zweite Überwachungsvorrichtung zur Überwachung der ausgangsseitigen Oberfläche des optischen Elements. Die erste Überwachungsvorrichtung weist einen ersten Detektor und eine erste Lichtquelle auf, deren Strahlung von der dem Detektor und der Lichtquelle zugewandten eingangsseitigen Oberfläche des optischen Elements auf den Detektor zumindest teilweise reflektiert wird. Die zweite Überwachungsvorrichtung weist einen zweiten Detektor und eine zweite Lichtquelle auf, deren Strahlung von der dem Detektor und der Lichtquelle zugewandten ausgangsseitigen Oberfläche des optischen Elements auf den Detektor zumindest teilweise reflektiert wird.

DE 31 43 422 A1 befasst sich mit dem Problem, dass es am Faserausgang von Faseroptiken zu Überhitzungen mit Verdampfungserscheinungen kommen kann. Das verdampfte Fasermaterial kann sich auf benachbarten optischen Elementen, beispielsweise den Linsen der Laserstrahl-Leiteinrichtung, niederschlagen und zu veränderten optischen Eigenschaften führen. DE 31 43 422 A1 offenbart verschiedene Anordnungen zur Überwachung der Funktionalität einer im Strahlengang eines Laserstrahls angeordneten Laserstrahl-Leiteinrichtung, die eine Faseroptik, eine erste Linse am Eingang und eine zweite Linse am Ausgang der Faseroptik umfasst. Die verschiedenen Überwachungsanordnungen unterscheiden sich hinsichtlich der verwendeten Lichtquelle (Laserstrahl oder externe Lichtquelle) und der Messstrahlung (direkter oder reflektierter Lichtstrahl), die auf den Detektor trifft. Allen Überwachungsanordnungen ist gemeinsam, dass nicht der Faserausgang der Faseroptik überwacht wird, sondern Änderungen, die sich in der Umgebung der Faseroptik oder auf benachbarten optischen Elementen zeigen, detektiert werden. Wenn durch eine Überhitzung der Faseroptik Fasermaterial verdampft, schlagen sich die Dämpfe auf der Emissionsfläche der Lichtquelle oder der Detektorfläche nieder und bewirken eine Änderung des Detektorsignals.

US-A-5 159 402 offenbart mehrere Anordnungen zur Überwachung der Funktionalität eines im Strahlengang eines Laserstrahls angeordneten optischen Elements. Fig. 5 zeigt ein Lasersystem mit mehreren optischen Elementen, zu deren Überwachung eine Überwachungsvorrichtung mit mehreren Detektoren (Fotodioden) und Lichtquellen (Laserdioden), welche gegenüberliegend zu den Detektoren angeordnet sind, vorgesehen sind. Die Messstrahlung der Lichtquellen durchquert die optischen Elemente an der Mantelfläche in der Nähe der optischen Oberfläche und die Detektoren empfangen die durch die optischen Elemente transmittierte Strahlung.

JP 63 207487 A offenbart eine Überwachungsanordnung mit einer Überwachungsvorrichtung, die einen Detektor, eine Lichtquelle und eine Auswerteeinrichtung umfasst und dient zur Überwachung der Ausrichtung und des Absorptionsverlusts eines Laserresonators. Der Detektor und die Lichtquelle sind an der Halteplatte eines totalreflektierenden Resonatorspiegels befestigt. Die Messstrahlung der Lichtquelle ist auf den teiltransmissiven Resonatorspiegel gerichtet und wird von dort in Richtung des Detektors reflektiert. Die reflektierte Messstrahlung wird mittels einer Linse auf den Detektor abgebildet.

JP 59 082184 A offenbart eine Anordnung zur Überwachung der Funktionalität einer im Strahlengang eines Laserstrahls angeordneten Sammellinse mit einer Überwachungsvorrichtung, die einen Detektor und eine Lichtquelle aufweist. Der Messstrahl der Lichtquelle durchquert die Sammellinse, so dass der Detektor den von der Sammellinse transmittierten Messstrahl empfängt. Die Überwachungsvorrichtung weist außerdem einen Spiegel auf, der den transmittierten Messstrahl auf den Detektor ablenkt.

BE-A-1 007 005 offenbart schließlich eine Vorrichtung zur Bestimmung der Energieflussleistung eines Hochleistungslasers. Die Vorrichtung umfasst eine Messlaserstrahlquelle, eine Messzelle mit einem Fenster, das quer zum Energiefluss gerichtet ist, um einen geringen Energiefluss auf seiner Oberfläche zu absorbieren, wenn der Energiefluss hindurchgeht, eine optische Faser zwischen Messlaserstrahl und Messzelle, die ihn unter einem solchen Winkel auf die Fensteroberfläche richtet, dass dieser Messlaserstrahl reflektiert wird, einen Positionsdetektor and ein Faserbündel zwischen Positionsdetektor und Messzelle zum Absorbieren des reflektierten Messlaserstrahls, dessen Reflexionswinkel von der Energieflussleistung abhängig ist.

Der Erfindung liegt daher die Aufgabe zugrunde, bei einer Überwachungsanordnung der eingangs genannten Art die Justage zum optischen Element zu vereinfachen.

Diese Aufgabe wird erfindungsgemäß dadurch gelöst, dass die Lichtquelle (z.B. Leuchtdiode) und der Detektor (z.B. Photodiode) in einer gemeinsamen Halterung angeordnet, insbesondere in die Optikhalterung des optischen Elements integriert sind.

Der Detektor erfasst die außen am optischen Element reflektierte Strahlung der Lichtquelle, deren Intensität von der Oberflächenbeschaffenheit des optischen Elements abhängt. So kann das optische Element auf Funktionalitätsänderungen, insbesondere auf Grund von Beschädigungen oder Alterung seiner Oberfläche, überwacht und rechtzeitig ausgetauscht werden. Die Überwachung des optischen Elements kann während des Betriebs (online), d.h. im Falle eines Lasers bei eingeschalteter Laserstrahlung, oder während einer Bearbeitungspause (offline) erfolgen.

Die Wellenlänge der Lichtquelle unterscheidet sich in der Regel von der Laserwellenlänge, z.B. 10,6 µm für CO₂-Laser. Sie wird so ausgewählt, dass die zu überwachende Oberfläche des optischen Elements zumindest einen Teil der Strahlung der Lichtquelle reflektiert. Daher ist es möglich, auch für die Laserwellenlänge transparente optische Elemente auf Funktionalität ihrer Oberfläche zu überwachen. Bevorzugt ist das optische Element aus Zink-Selenid (ZnSe), Gallium-Arsenid (GaAs) oder Diamant gebildet.

Bei besonders bevorzugten Ausführungsformen der Erfindung sind die Lichtquelle und der Detektor seitlich zum optischen Element und unter dem gleichen Winkel zur überwachten Oberfläche des optischen Elements, vorzugsweise unter einem Winkel von kleiner als 30°, angeordnet.

Bevorzugt ist noch eine Einrichtung, z.B. ein Mikroprozessor, zum Vergleichen der jeweils detektierten Lichtintensität mit einer gespeicherten Referenzintensität vorgesehen. Weicht die vom Detektor gemessene Lichtintensität um einen definierten Wert von der gespeicherten Referenzintensität ab, wird eine Fehlermeldung ausgegeben und z.B. der Laser abgeschaltet.

Die Erfindung betrifft in einem weiteren Aspekt auch einen Laser, insbesondere CO₂-Laser, mit einer für ein optisches Element der Laseroptik vorgesehenen Überwachungsvorrichtung, wie sie oben beschreiben ist.

Vorzugsweise ist die Überwachungsvorrichtung für den Auskoppelspiegel des Laserresonators vorgesehen, und zwar entweder für die dem Laserresonator zugewandte Innenseite oder die dem Laserresonator abgewandte Außenseite des Auskoppelspiegels.

Weitere Vorteile der Erfindung ergeben sich aus der Beschreibung und den Zeichnungen. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigt:
- Fig. 1: eine erste Ausführungsform der erfindungsgemäßen Vorrichtung zur Überwachung des Auskoppelspiegels eines Laserresonators in einem Längsschnitt; und
- Fig. 2: eine zweite Ausführungsform der erfindungsgemäßen Überwachungsvorrichtung in einer Darstellung analog zu Fig. 1.

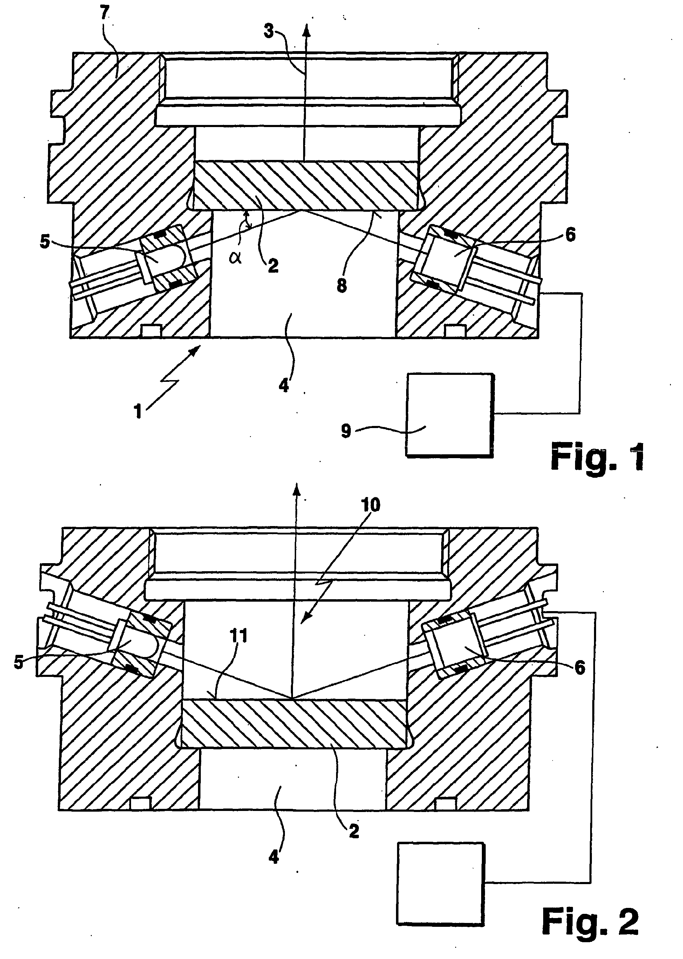

Die in **Fig. 1** gezeigte Vorrichtung **1** dient zum Überwachen der Funktionalität des Auskoppelspiegels **2** eines Lasers. Mittels des teildurchlässigen Auskoppelspiegels **2** wird ein Laserstrahl **3** aus einem Laserresonator **4** in Richtung auf ein zu bearbeitendes Werkstück (nicht gezeigt) ausgekoppelt.

Die Überwachungsvorrichtung 1 umfasst eine z.B. als Leuchtdiode ausgebildete Lichtquelle **5** und einen z.B. als Photodiode ausgebildeten Detektor **6**, die beide auf der dem Laserresonator 4 zugewandten Seite des Auskoppelspiegels 2 in eine Halterung **7** des Auskoppelspiegels 2 integriert sind. Dabei liegen die Lichtquelle 5 und der Detektor 6 bezüglich des Auskoppelspiegels 2 einander diametral gegenüber und sind unter dem gleichen Winkel zu der dem Laserresonator 4 zugewandten Spiegelfläche **8** des Auskoppelspiegels 2 und seitlich zum Auskoppelspiegel 2 angeordnet. Die Leucht- und Photodiode bilden gleichzeitig einen Abschluss des resonatorinternen Vakuums gegen die Atmosphäre.

Die von der Lichtquelle 5 mit einer Referenzintensität abgestrahlte Strahlung ist mittig auf die Spiegeloberfläche 8 und unter einem solchen Winkel von insbesondere kleiner als 30° gerichtet, dass sie von der Spiegeloberfläche 8 auf den gegenüberliegenden Detektor 6 reflektiert wird. Die gemessene Intensität der reflektierten Strahlung hängt von der Beschaffenheit der Spiegeloberfläche 8 ab und ist daher ein Maß für Beschädigungen und Alterung der Spiegeloberfläche 8. Die gemessene Lichtintensität wird einer Einrichtung **9**, z.B. einem Mikroprozessor, zugeführt, um die gemessene Lichtintensität mit einer gespeicherten Referenzintensität zu vergleichen. Als Referenzintensität kann z.B. die mit einem neuwertigen Auskoppelspiegel 2 gemessene Lichtintensität verwendet werden. Weicht die vom Detektor 6 gemessene Lichtintensität um einen definierten Wert von der gespeicherten Referenzintensität ab, gibt die Einrichtung 9 eine Fehlermeldung aus und schaltet den Laser ab.

Von der Überwachungsvorrichtung 1 unterscheidet sich die in **Fig. 2** gezeigte Überwachungsvorrichtung **10** nur dadurch, dass sie auf der dem Laserresonator **4** abgewandten Seite des Auskoppelspiegels 2 angeordnet ist und daher die andere Oberfläche **11** des Auskoppelspiegels 2 auf Funktionalität überwacht.

## Patentansprüche

1. Anordnung zur Überwachung der Funktionalität eines im Strahlengang eines Laserstrahls (3) angeordneten optischen Elements (2), mit einer Überwachungsvorrichtung (1), die einen Detektor (6) und eine Lichtquelle (5) aufweist, deren Strahlung von der dem Detektor (6) und der Lichtquelle (5) zugewandten Oberfläche (8; 11) des optischen Elements (2) auf den Detektor (6) zumindest teilweise reflektiert wird, wobei die Lichtquelle (5) eine andere Wellenlänge als der Laserstrahl (3) hat,
**dadurch gekennzeichnet,**
**dass** die Lichtquelle (5) und der Detektor (6) in eine Halterung (7) des optischen Elements (2) integriert sind.

2. Überwachungsanordnung nach Anspruch 1, **dadurch gekennzeichnet, dass** die Strahlung der Lichtquelle (5) mittig auf die überwachte Oberfläche (8; 11) des optischen Elements (2) gerichtet ist.

3. Überwachungsanordnung nach Anspruch 1 oder 2, **dadurch gekennzeichnet, dass** die Lichtquelle (5) und/oder der Detektor (6) seitlich zum optischen Element (2) angeordnet ist.

4. Überwachungsanordnung nach einem der vorhergehenden Ansprüche, **dadurch gekennzeichnet, dass** die Lichtquelle (5) und der Detektor (6) unter dem gleichen Winkel zur überwachten Oberfläche (8; 11) des optischen Elements (2) angeordnet sind.

5. Überwachungsanordnung nach einem der vorhergehenden Ansprüche, **dadurch gekennzeichnet, dass** die Strahlung der Lichtquelle (5) unter einem Winkel (α) von kleiner als 30° auf die überwachte Oberfläche (8; 11) des optischen Elements (2) gerichtet ist.

6. Überwachungsanordnung nach einem der vorhergehenden Ansprüche, **dadurch gekennzeichnet, dass** die Lichtquelle (5) als Leuchtdiode und der Detektor (6) als Photodiode ausgebildet sind.

7. Überwachungsanordnung nach einem der vorhergehenden Ansprüche, **gekennzeichnet durch** eine Einrichtung (9) zum Vergleichen der detektierten Lichtintensität mit einer Referenzintensität und insbesondere zur Abgabe eines Fehler- und/oder Steuersignals bei Abweichung der vom Detektor (6) detektierten Lichtintensität um einen definierten Wert.

8. Überwachungsanordnung nach einem der vorhergehenden Ansprüche, **dadurch gekennzeichnet, dass** das optische Element (2) aus Zink-Selenid (ZnSe), Gallium-Arsenid (GaAs) oder Diamant gebildet ist.

9. Laser, insbesondere CO₂-Laser, mit einer für ein optisches Element (2) der Laseroptik vorgesehenen Überwachungsanordnung nach einem der vorhergehenden Ansprüche.

10. Laser nach Anspruch 9, **dadurch gekennzeichnet, dass** die überwachte Oberfläche (8) eine im Laserresonator (4) vorgesehene Spiegeloberfläche, insbesondere die dem Laserresonator (4) zugewandte Innenseite eines Auskoppelspiegels (2), ist.

11. Laser nach Anspruch 9, **dadurch gekennzeichnet, dass** die überwachte Oberfläche (11) die dem Laserresonator (4) abgewandte Außenseite eines Auskoppelspiegels (2) ist.

12. Laser nach einem der Ansprüche 9 bis 11, **dadurch gekennzeichnet, dass** die Überwachungsvorrichtung (1) bei Abweichung der vom Detektor (6) detektierten Lichtintensität um einen definierten Wert ein Fehlersignal ausgibt und/oder den Laser abschaltet.

## Claims

1. An arrangement for monitoring the functionality of an optical element (2) that is disposed in the optical path of a laser beam (3), comprising a monitoring device (1) having a detector (6) and a light source (5), the radiation of which is at least partially reflected by the surface (8; 11) of the optical element (2) facing the detector (6) and the light source (5) to the detector (6), wherein the light source (5) has a different wavelength than the laser beam (3), **characterized in that** the light source (5) and the detector (6) are integrated in a holder (7) of the optical element (2).

2. The monitoring arrangement according to claim 1, **characterized in that** the radiation of the light source (5) is directed to the center of the monitored surface (8; 11) of the optical element (2).

3. The monitoring arrangement according to claim 1 or 2, **characterized in that** the light source (5) and/or the detector (6) is/are disposed laterally with respect to the optical element (2).

4. The monitoring arrangement according to any one of the preceding claims, **characterized in that** the light source (5) and the detector (6) are disposed at the same angle with respect to the monitored surface (8; 11) of the optical element (2).

5. The monitoring arrangement according to any one of the preceding claims, **characterized in that** the radiation of the light source (5) is directed to the monitored surface (8; 11) of the optical element (2) at an angle (α) of less than 30°.

6. The monitoring device according to any one of the preceding claims, **characterized in that** the light source (5) is designed as a light diode and the detector (6) is designed as a photo diode.

7. The monitoring arrangement according to any one of the preceding claims, **characterized by** a means (9) for comparing the detected light intensity with a reference intensity and, in particular, for outputting an error and/or control signal if the light intensity detected by the detector (6) differs by a defined value.

8. The monitoring arrangement according to any one of the preceding claims, **characterized in that** the optical element (2) is formed of zinc selenide (ZnSe), gallium arsenide (GaAs) or diamond.

9. A laser, in particular a CO₂ laser, with a monitoring device provided for an optical element (2) of the laser optics, according to any one of the preceding claims.

10. The laser according to claim 9, **characterized in that** the monitored surface (8) is a mirror surface provided in the laser resonator (4), in particular, the inner side of a decoupling mirror (2) facing the laser resonator (4).

11. The laser according to claim 9, **characterized in that** the monitored surface (11) is the outer side of a decoupling mirror (2) facing away from the laser resonator (4).

12. The laser according to any one of the claims 9 through 11, **characterized in that** the monitoring device (1) outputs an error signal if the light intensity detected by the detector (6) differs by a defined value and/or switches off the laser.

## Revendications

1. Système de surveillance de la fonctionnalité d'un élément optique (2) disposé dans le chemin optique d'un faisceau laser (3), avec un dispositif de surveillance (1) qui présente un détecteur (6) et une source de lumière (5) dont le rayonnement est réfléchi au moins partiellement vers le détecteur (6) par la surface (8 ; 11) de l'élément optique (2) tournée vers le détecteur (6) et la source de lumière (5), la source de lumière (5) ayant une autre longueur d'onde que le faisceau laser (3),
**caractérisé en ce**
**que** la source de lumière (5) et le détecteur (6) sont intégrés dans un support (7) de l'élément optique (2).

2. Système de surveillance selon la revendication 1, **caractérisé en ce que** le rayonnement de la source de lumière (5) est dirigé sur le centre de la surface surveillée (8 ; 11) de l'élément optique (2).

3. Système de surveillance selon la revendication 1 ou 2, **caractérisé en ce que** la source de lumière (5) et/ou le détecteur (6) est/sont disposé(s) latéralement par rapport à l'élément optique (2).

4. Système de surveillance selon une des revendications précédentes, **caractérisé en ce que** la source de lumière (5) et le détecteur (6) sont disposés suivant le même angle par rapport à la surface surveillée (8 ; 11) de l'élément optique (2).

5. Système de surveillance selon une des revendications précédentes, **caractérisé en ce que** le rayonnement de la source de lumière (5) est dirigé suivant un angle (α) inférieur à 30° sur la surface surveillée (8 ; 11) de l'élément optique (2).

6. Système de surveillance selon une des revendications précédentes, **caractérisé en ce que** la source de lumière (5) est réalisée sous la forme d'une diode électroluminescente et le détecteur (6) sous la forme d'une photodiode.

7. Système de surveillance selon une des revendications précédentes, **caractérisé par** un dispositif (9) pour comparer l'intensité lumineuse détectée avec une intensité de référence et en particulier pour délivrer un signal d'erreur et/ou de commande en cas de divergence d'une valeur définie de l'intensité lumineuse détectée par le détecteur (6).

8. Système de surveillance selon une des revendications précédentes, **caractérisé en ce que** l'élément optique (2) est réalisé en séléniure de zinc (ZnSe), arséniure de gallium (GaAs) ou diamant.

9. Laser, en particulier laser au CO₂, avec un système de surveillance selon une des revendications précédentes prévu pour un élément optique (2) de l'optique laser.

10. Laser selon la revendication 9, **caractérisé en ce que** la surface surveillée (8) est une surface réfléchissante prévue dans le résonateur laser (4), en particulier la face intérieure d'un miroir de sortie (2) tournée vers le résonateur laser (4).

11. Laser selon la revendication 9, **caractérisé en ce que** la surface surveillée (11) est la face extérieure d'un miroir de sortie (2) opposée au résonateur laser (4).

12. Laser selon une des revendications 9 à 11, **caractérisé en ce que** le dispositif de surveillance (1) délivre un signal d'erreur et/ou coupe le laser en cas de divergence d'une valeur définie de l'intensité lumineuse détectée par le détecteur (6).
